Europäisches Patentamt

European Patent Office

Office européen des brevets

(11) Veröffentlichungsnummer: **0 388 883**
**A2**

## (12) EUROPÄISCHE PATENTANMELDUNG

(21) Anmeldenummer: **90105230.8**

(22) Anmeldetag: **20.03.90**

(51) Int. Cl.5: **B01D 53/08**

(30) Priorität: **23.03.89 DE 8903669 U**

(43) Veröffentlichungstag der Anmeldung:
**26.09.90 Patentblatt 90/39**

(84) Benannte Vertragsstaaten:
**BE DE ES FR GB GR IT LU NL**

(71) Anmelder: **RHEINBRAUN Aktiengesellschaft**
**Stüttgenweg 2**
**D-5000 Köln 41(DE)**

(72) Erfinder: **Günter, Ritter, Dr.**
**Goethestrasse 29**
**D-5040 Brühl(DE)**
Erfinder: **Eicken, Mirko, Dipl.-Ing.**
**Wendelinstrasse 87a**
**D-5000 Köln 41(DE)**

(74) Vertreter: **Koepsell, Helmut, Dipl.-Ing.**
**Mittelstrasse 7**
**D-5000 Köln 1(DE)**

(54) **Vorrichtung zum Reinigen von Gasen.**

(57) Die Erfindung betrifft eine Vorrichtung zum Reinigen von Gasen mit Hilfe von feinkörnigem kohlenstoffhaltigem Material.

Ihr liegt die Aufgabe zugrunde, eine lose Schüttung des kohlenstoffhaltigen Materials in begrenzten Mengen und an beliebigen Orten anzuordnen, um das Gas durch das Material hindurchzuleiten.

Als Lösung wird ein transportabler und verschließbarer Behälter (1) zur Aufnahme des kohlenstofhaltigen Materials angegeben, der einen rechtekkigen Querschnitt und auf der Ober- (3) und Unterseite (6) jeweils eine Öffnung für das Material hat. Seitlich aus dem unteren Bereich des Behältes (1) ist ein Einströmstutzen (21) herausgeführt, der in mehreren hohlen Anströmleisten (11) mündet, die sich parallel und in gegenseitigem Abstand (13) in einer Ebene quer über den Querschnitt des Behälters (1) erstrecken. Auf der Oberseite (3) des Behältes (1) ist ein Auslaßstutzen (25) für das gereinigte Gas (26) herausgeführt. Das Gas durchströmt den Behälter (1) und damit die Schüttung des kohlenstoffhaltigen Materials senkrecht von unten nach oben. Bei dem zu reinigenden Gas kann es sich um Luff handeln. Als kohlenstoffhaltiges Material kann Herdofenkoks aus Braunkohle verwendet werden.

FIG.1

## Vorrichtung zum Reinigen von Gasen

Die Erfindung betrifft eine Vorrichtung zum Reinigen von Gasen mit Hilfe von feinkörnigem kohlenstoffhaltigen Material. Bei der Reinigung des Gases ist vorgesehen, das Gas von unten nach oben durch eine lose Schüttung aus dem feinkörnigen, kohlenstoffhaltigen Mateiral zu leiten und dabei zu reinigen. Bei dem Gas handelt es sich um Luft, aber auch andere technische Gase, wie z. B. Brenn- oder Inertgase, können auf diese Weise mit kohlenstoffhaltigem Material behandelt werden. Bei dem kohlenstoffhaltigen Material handelte es sich um einen Stoff mit großer aktiver Porenoberfläche. Besonders geeignet für die Reinigung bzw. Behandlung von Luft und Gasen ist z. B. Herdofenkoks, der durch die Verkokung von Braunkohle auf einem Herdofen gewonnen wird. Für die gleichen Zwecke hat sich ebenso Restkoks als geeignet erwiesen, der bei der Vergasung von Braunkohle im Wirbelbett anfällt. Daneben kommen aber auch noch andere Reinigungsmaterialien, wie z. B. Aktivkohle und Kalkgranulat für die Reinigung von Gasen in Betracht. Diese Stoffe sind ebenfalls körnig.

Die bekannten Stoffe Herdofenkoks und Restkoks aus Braunkohle sind für die Reinigung von Luft und Gasen besonders wirksam. Deshalb reicht üblicherweise eine begrenzte Menge diesr Stoffe aus, um eine große Menge von Luft bzw. Gasen damit zu behandeln.

Die Erfindung hat sich die Aufgabe gestellt, eine lose Schüttung des kohlenstoffhaltigen Materials in begrenzten Mengen und an beliebigen Orten so anzuordnen, daß die Luft bzw. das Gas durch diese Schüttung hindurch geleitet werden kann. Dabei soll die Anordnung handhabungsfreundlich sein, d.h., das kohlenstofhaltige Material soll möglichst in der Form einer "Filterpackung" zur Verfügung gestellt werden, ohne daß sich der Benutzer um das Herstellen und Erneuern der Schüttung selbst bemühen muß. Auch soll die Anordnung zuverlässig und preisgünstig sein. Die Anordnung soll einzeln oder in einer Mehrzahl von Gebinden, die einfach aufgestellt und ausgewechselt werden können, zur Verfügung stehen.

Zur Lösung dieser Aufgabe wird ein transportabler und verschließbarer Behälter vorgeschlagen, der einen rechteckigen Querschnitt hat und zur Aufnahme einer vorbestimmten Menge an kohlenstoffhaltigem Material in loser Schüttung geeignet ist. Der Behälter weiset auf der Oberseite eine Einfüllöffnung und auf der Unterseite eine Auslaßöffnung für das kohlenstoffhaltige Material auf. An dem Behälter ist an eine Seitenwand im unteren Bereich ein Eintrömstutzen für das Gas seitlich herangeführt, welches durch das kohlenstoffhaltige Material gereinigt werden soll. Der Einströmstutzen für das Gas mündet in einer Mehrzahl von hohlen Anströmleisten, die sich parallel und in gegenseitigem Abstand in einer Ebene quer über den Querschnitt des Behälters erstrecken. Aus diesen Anströmleisten tritt das Gas in die Schüttung des kohlenstoffhaltigen Materials ein und durchströmt die Schüttung von unten nach oben. Dementsprechend ist auf der Oberseite des erfindungsgemäßen Behälters ein Ausströmstutzen für das Herausführen des gereinigten Gases vorgesehen.

Der Behälter hat den Vorteil, daß er mit großtechnischen Verladeeinrichtungen, wie beispielsweise Faltenbälgen, befüllt und durch die untere Klappe bzw. den Schieber auf einfache Weise wieder entleert werden kann.

Für die Bedienung der erfindungsgemäßen Vorrichtung ist vorgesehen, das kohlenstoffhaltige Mateiral nach Erreichen seiner Standzeit, d. h. sobald es verschmutzt ist, durch Öffnen einer Klappe oder eines Schiebers auf der Unterseite des Behälters aus dem Behälter zu entfernen, die Klappe oder den Schieber zu verschließen und, durch Öffnen eines Deckels auf der Oberseite des Behältes, frisches kohlenstoffhaltiges Material in den Behälter einzufüllen. Daneben ist aber auch die Möglichkeit vorgesehen, durch einfaches Abtrennen der Gasanschlüsse den Behälter mitsamt dem verbrauchten kohlenstoffhaltigen Material zu entfernen und an seine Stelle einen gleichartigen Behälter hinzusetzen und mit den Anschlußleitungen für das Gas zu verbinden, welcher mit frischem kohlenstoffhaltigem Material gefüllt ist.

Die Menge der in dem Behälter zur Verfügung gestellten Schüttung an kohlenstoffhaltigem Material ist unter Zugrundelegung einer ausreichend großen Standzeit durch die Menge des zu reinigenden Gases und durch dessen Verschmutzungsgrad vorgegeben. Unter besonderen Umständen kann auch das Hintereinanderschalten von einer Mehrzahl von Behältern vorgesehen sein, wenn beispielsweise das Gas mit Stoffen verunreinigt ist, welche ein unterschiedliches Druchbruchverhalten aufweisen. Unter dem Durchbruchverhaltenk versteht man das Zurückhaltevermögen des kohlenstoffhaltigen Materials gegenüber einem ganz bestimmten Stoff. Dieses Rückhaltevermögen kann bei gleichzeitiger Beaufschlagung des kohlenstoffhaltigen Materials mit mehreren unterschiedlichen Stoffen deutlich unterschiedlich sein, d.h., die Grenze der Aufnahmefähigkeit des kohlenstoffhaltigen Materials für den einen Stoff kann durchaus schon erreicht sein, während sie für den anderen Stoff noch lange nicht erreicht ist.

Vorteilhafte Ausgestaltungen der erfindungsgemäßen Vorrichtung ergeben sich aus den Unteransprüchen.

Nachfolgend wird ein Ausführungsbeispiel der Erfindung näher erläutert. Es zeigen in teilweise vereinfachter, schematischer und nicht maßstäblicher Darstellung

Fig. 1 die Vorderansicht einer Vorrichtung zum Reinigen von Gasen,

Fig. 2 die zugehörige Seitenansicht,

Fig. 3 einen Schnitt entlang der Linie III-III der Fig. 2,

Fig. 4 den Querschnitt durch eine Anströmleiste in natürlicher Größe im Ausschnitt A der Fig. 1.

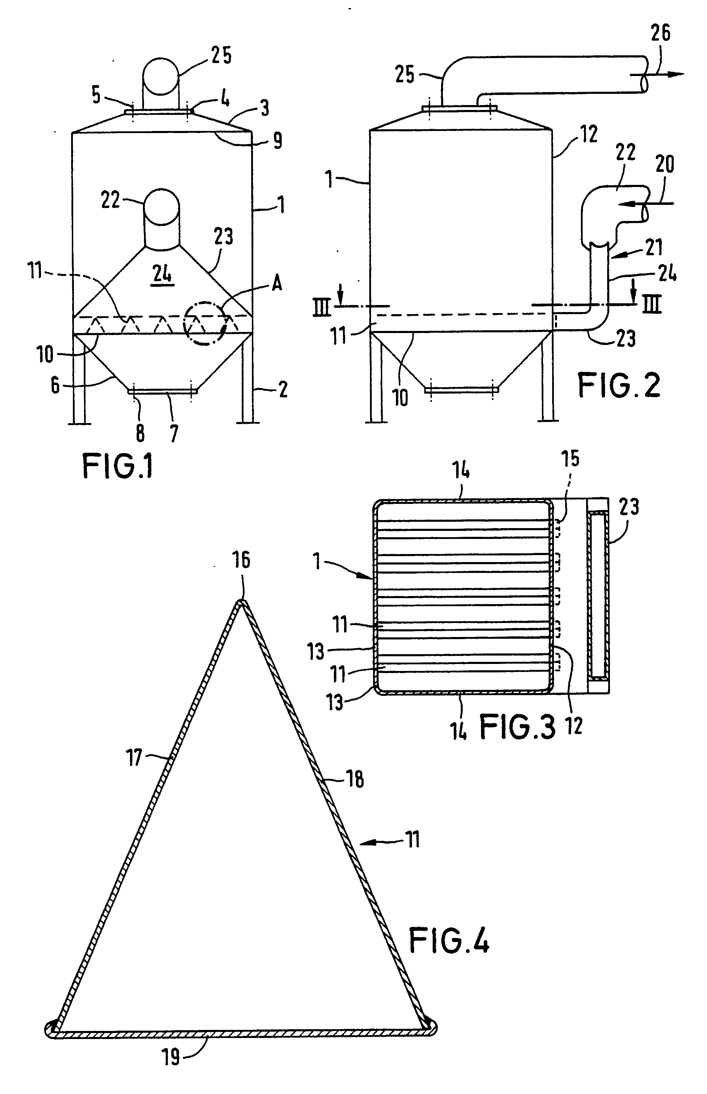

Die in der Zeichnung dargestellte Vorrichtung weist einen Behälter 1 auf, der einen rechteckigen Querschnitt hat, wie das aus der Fig. 3 erkennbar ist. Der Behälter 1 ist transportabel und zu seiner Aufstellung an beliebigen Orten sind Stützen 2 oder ein Stützrahmen (nicht gezeigt) für den Transport mit einem Gabelstapler vorgesehen. Die Oberseite 3 des Behälters 1 ist trichterförmig ausgebildet und mit einem Deckel 4 verschließbar. Der Deckel 4 kann sowohl als einfacher Deckel oder Klapp- oder Schraubdeckel ausgebildet sein. Zur Befestigung des Deckels 4 auf der Oberseite 3 sind Schrauben 5 vorgesehen.

Die Unterseite 6 des Behälters 1 ist ebenfalls trichterförmig ausgebildet und mit einem Schieber 7 oder einer Klappe (nicht gezeigt) verschließbar. Innerhalb des Behälters 12 befindet sich eine lose Schüttung (nicht gezeigt) aus kohlenstoffhaltigem Material, deren Höhe etwa bis zur Oberkante 9 des Behälters 1 reicht. Bei dem kohlenstoffhaltigen Material handelt es sich beispielsweise um Herdofenkoks, der durch die Verkokung von Braunkohle auf dem Herdofen gewonnen wurde. Dieser Herdofenkoks ist feinkörnig und liegt in Korngrößen bis zu 5 mm vor. Der Herdofenkoks füllt den gesamten Innenraum des Behälters 1 vom Schieber 7 bis zur Oberkante 9 aus.

In Höhe der Unterkante 10 sind mehrere Anströmleisten 11 vorgesehen, die von der vorderen Seitenwand 12 ausgehend den Querschnitt des Behälters 1 in der Höhe der durch die Unterkante 10 vorgegebenen Ebene durchziehen. Die Anströmleisten 11 sind parallel zueinander angeordnet, wobei zwischen benachbarten Anströmleisten 11 jeweils ein Abstand 13 offen bleibt, der im übrigen auch zwischen den randseitigen Anströmleisten 11 und den Seitenwänden 14 eingehalten ist. Die Anströmleisten 11 ragen um ein kurzes Stück 15 über die Seitenwand 12 hinaus, wie das in der Fig. 3 deutlich erkennbar ist. Die Seitenwand 12 wird von den Anströmleisten 11 durchstoßen und umgibt jede der Anströmleisten 11 auf ihrem Umfang vollständig. Ebenso werden die Anströmleisten 11 innerhalb des Behälters 1 von der Schüttung des kohlenstoffhaltigen Materials vollständig umgeben,

ohne daß das Material dabei in die Anströmleisten selbst eindringt. Wie aus Fig. 4 erkennbar, haben die Anströmleisten 11 einen dreieckigen Querschnitt, dessen Spitze 16 nach oben weist. An die Spitze 16 schließen sich die beiden geschlossenen, also keine Löcher aufweisenden Seitenschenkel 17 und 18 nach unten weisend an. Die Unterseite 19 der Anströmleisten 11 wird von einem Lochblech oder Sieb gebildet. Dieses Sieb 19 verbindet die beiden Schenkel 17 und 18 seitlich und ist damit fest und unlösbar verschweißt. Während die Schüttung an den beiden geschlossenen Seitenschenkeln 17 und 18 aufliegt, kann das zu reinigende Gas 20 durch das Sieb 19 hindurch und in die Schüttung innerhalb des Behälters 1 eintreten.

Zum Einleiten des zu reinigenden Gases 20 in den Behälter 1 ist ein Einströmstutzen 21 vorgesehen, der ein rohrförmiges Teil 22 und ein Mündungsteil 23 aufweist, welche fest miteinander verbunden sind. Das Mündungsteil 23 ist in seinem unteren Bereich verbreitert und auf der Höhe der Unterkante 10 an den Behälter 1 angeschraubt, wobei sich das Mündungsteil 23 über die gesamte Breite der Seitenwand 12 des Behälters 1 erstreckt. Die Verbreiterung des Mündungsteils 23 ist in der Fig. 1 erkennbar. Das Mündungsteil 23 ist außerdem auf der Höhe der Unterkantge 10 abgewinkelt und erstrckt sich mit einem abgewinkelten Teil 24 im Abstand zur Seitenwand 12 und parallel dazu senkrecht nach oben. Durch das Abwinkeln 24 des Mündungsteiles 23 erhält die Vorrichtung eine besondere raumsparende Ausgestaltung.

Am oberen Deckel 4 ist ein Ausströmstutzen 25 für das gereinigte Gas 26 vorgesehen. Auch der Ausströmstutzen 25 ist in die Horizontale abgewinkelt, um den Raumbedarf der neuerungsgemäßen Vorrichtung zu begrenzen. Der Ausströmstutzen 25 kann mit dem Deckel 4 vereinigt sein; er kann aber auch unmittelbar an die Oberseite 3 angeschlossen sein. Diese Form der Ausgsetaltung der Vorrichtung ist besonders günstig, wenn das kohlenstoff- haltige Material in demm Behälter 1 erneuert wer- den soll, ohne daß der Behälter 1 dabei von seinem Aufstellungsort wegbewegt werden muß.

## Ansprüche

1. Vorrichtung zur Reinigung von Gasen mit Hilfe von feinkörnigem kohlenstoffhaltigen Material, gekennzeichnet durch
- einen transportablen und verschließbaren Behälter (1) mit rechteckigem Querschnitt zur Aufnahme einer losen Schüttung des kohlenstoffhaltigen Materials, der für das Material
- auf der Oberseite (3) eine Einfüllöffnung und
- auf der Oberseite (6) eine Auslaßöffnung und für das Gas (29)

- einen im unteren Bereich seitlich herangeführten Einströmstutzen (21) aufweist, der in
- eine Mehrzahl von hohlen Anströmleisten (11) mündet, die sich parallel und in gegenseitigem Abstand (13) in einer Ebene quer über den Querschnitt des Behälters (1) erstrecken sowie
- einen auf der Oberseite (3) herausgeführten Ausströmstutzen (25).

2. Vorrichtung nach Anspruch 1, dadurch gekennzeichnet, daß die Einfüllöffnung für das Material und der Ausströmstutzen (25) für das gereinigte Gas (26) miteinander vereint sind.

3. Vorrichtung nach Anspruch 1, dadurch gekennzeichnet, daß der Einströmstutzen (21) für das Gas (20) eine verbreiterte Mündung (23) aufweist, die sich über die Breite des Behälters (1) erstreckt.

4. Vorrichtung nach Anspruch 3, dadurch gekennzeichnet, daß die Mündung (23) nach oben abgewinkelt ist und sich parallel zur Seitenwand (12) des Behälters (1) erstreckt.

5. Vorrichtung nach Anspruch 1, dadurch gekennzeichnet, daß die Anströmleisten (11) einen dreieckigen Querschnitt haben, von dem eine Spitze (16) nach oben weist.

6. Vorrichtung nach Anspruch 5, dadurch gekennzeichnet, daß die beiden oberen Dreiecksseiten (17, 18) der Anströmleisten (11) geschlossen und die untere Dreieckssseite (19) als Sieb oder Lochblech ausgebildet ist.

7. Vorrichtung nach einem der Ansprüche 5 und 6, dadurch gekennzeichnet, daß die Anströmleisten (11) ein kurzes Stück (15) aus der Seitenwand (12) des Behälters (1) herausgeführt sind und innerhalb der Mündung (23) des Einströmstutzens (21) für das Gas (20) enden.

8. Vorrichtung nach Anspruch 1, dadurch gekennzeichnet, daß die Einfüllöffnung für das Material einen klapp- und/oder verschraubbaren Deckel (4) aufweist.

9. Vorrichtung nach Anspruch 8, dadurch gekennzeichnet, daß der Ausströmstutzen (25) für das gereinigte Gase (26) in den Deckel (4) für die Einfüllöffnung für das Material mündet.

10. Vorrichtung nach Anspruch 1, dadurch gekennzeichnet, daß die Auslaßöffnung für das Material eine Klappe oder einen verschließbaren Schieber (7) aufweist.

11. Vorrichtung nach Anspruch 1, dadurch gekennzeichnet, daß die Ober- (3) und/oder Unterseite (6) des Behälters (1) trichterförmig ausgebildet ist bzw. sind.

12. Vorrichtung nach Anspruch 1, dadurch gekennzeichnet, daß der Behälter (1) oder seine Teile aus Metall, insbesondere nichtrostendem Stahl, Kunststoff oder Holz ausgeführt ist.

13. Vorrichtung nach Anspruch 1, dadurch gekennzeichnet, daß der Behälter (1) Stützen (2) aufweist zum Abstellen auf dem Boden.

14. Vorrichtung nach Anspruch 1, dadurch gekennzeichnet, daß die Vorrictung aus einer Mehrzahl von Behältern (1) gebildet ist.

FIG.1

FIG.2

FIG.3

FIG.4